# EUROPEAN PATENT SPECIFICATION

(11) **EP 2 412 249 B1**
(45) Date of publication and mention of the grant of the patent: **28.12.2016**
(21) Application number: 10756283.7
(22) Date of filing: 25.03.2010
(51) Int. Cl.: A23L 27/20, A23L 27/26

(54) **FLAVORING MATERIAL**
DUFTMATERIAL
MATIÈRE AROMATIQUE

(30) Priority: 27.03.2009 JP 2009078329
(43) Date of publication of application: 01.02.2012
(73) Proprietor: AJINOMOTO CO., INC., Chuo-ku Tokyo 104-8315 (JP)
(72) Inventor: TAKAKURA, Yukiko, Kawasaki-shi Kanagawa 210-8681 (JP); HAYASHI, Kazuhiro, Kawasaki-shi Kanagawa 210-8681 (JP); IGA, Mayuko, Kawasaki-shi Kanagawa 210-8681 (JP); MASUZAWA, Takuya, Kawasaki-shi Kanagawa 210-8681 (JP)
(74) Representative: Strehl Schübel-Hopf & Partner
(86) International application number: PCT/JP2010/055995
(87) International publication number: WO 2010/110493

(56) References cited:
- WO-A1-01/03518
- WO-A1-2008/011742
- CN-A- 1 762 231
- DE-A1-102008 024 206
- GB-A- 1 571 005
- JP-A- 1 102 056
- JP-A- 3 255 198
- JP-A- 2002 332 492
- JP-A- 2003 079 336
- JP-A- 2009 023 964
- PARK D ET AL: "Identification of key volatiles responsible for odour quality differences in popped popcorn of selected hybrids", FOOD CHEMISTRY, ELSEVIER LTD, NL, vol. 99, no. 3, 1 January 2006 (2006-01-01), pages 538-545, XP027989451, ISSN: 0308-8146 [retrieved on 2006-01-01]
- FLORIAN MAYER ET AL: "Studies on the Aroma of Five Fresh Tomato Cultivars and the Precursors of cis - and trans -4,5-Epoxy-( E )-2-Decenals and Methional", JOURNAL OF AGRICULTURAL AND FOOD CHEMISTRY, vol. 56, no. 10, 1 May 2008 (2008-05-01), pages 3749-3757, XP055127962, ISSN: 0021-8561, DOI: 10.1021/jf0732915

## Description

### [Technical Field]

The present invention relates to a composition imparting aroma or flavor to foods.

### [Background Art]

Livestock meat stock is used not only for a soup (tan) of Chinese food but also Western cooking such as chicken bouillon, beef bouillon and the like, and becomes the base of foods. However, commercially available livestock meat extracts and the like are easily deteriorated by heating during production, and the development of a seasoning having the natural flavor of livestock meat is desired.

While the flavor components of livestock meat are analyzed in some documents and the like (non-patent document 1, non-patent document 2, non-patent document 3), precedent findings achieving the quantification are not many at present. Moreover, some patents and patent documents show blending of livestock meat flavor (patent document 1, patent document 2).

### [Document List]

### [patent documents]

[patent document 1] JP-B-03-38320
[patent document 2] JP-2519264

### [non-patent documents]

[non-patent document 1] Food Research International, 34, 149, 2001
[non-patent document 2] J. Agric. Food Chem., 53, 6455, 2005 [non-patent document 3] J. Agric. Food Chem., 31, 1287, 1983

### [SUMMARY OF THE INVENTION]

### [Problems to be Solved by the Invention]

However, blends of flavor compounds according to the analysis values of these non-patent documents showed only a weak effect, contained an extra aroma and the like, and preferable aroma or flavor of a livestock meat stock could not be imparted. In addition, blends of flavor compounds according to the compositions of patent document 1 and patent document 2 contained an extra aroma due to as many as 12 or more compounds to be blended. Therefore, preferable aroma or flavor could not be imparted, and moreover, there was a problem of inconvenience caused by many compounds to be blended and the like.

With the above-mentioned background, the present invention aims to provide a food material which can be more generally used, and can provide a strong aroma and/or flavor improving effect.
DE 10 2008 024206 A1, Park D. et al.: "Identification of key volatiles responsible for odour quality differences in popped popcorn of selected hybrids", FOOD CHEMISTRY, Elsevier Ltd., NL, vol. 99, no. 3, 1 January 2006, pages 538-545, WO 01/03518 A1, GB 1 571 005 A, and CN 1 762 231 A disclose flavouring compositions containing methional and dienals.

### [Means of Solving the Problems]

The present inventors have conducted intensive studies in an attempt to solve the above-mentioned problems and completed the present invention. The present invention encompasses each of the following inventions.
[1] An aroma or flavor-imparting composition comprising methional, dienals and thiazoles in proportions satisfying 20*A*80, 20*B*80 and 0<C*40 and A+B+C=100 wherein A shows parts by weight of methional, B shows parts by weight of dienals and C shows parts by weight of thiazoles, wherein the thiazoles are 2-isobutylthiazole and/or 5-acetyl-2,4-dimethylthiazole.
[2] The aroma or flavor-imparting composition according to [1], wherein the dienals include 2,4-decadienal 2,4-heptadienal, 2,4-nonadienal, and/or 2,4-undecadienal.
[3] A food containing the aroma or flavor-imparting composition according to [1] or [2] in not less than 1 ppb and not more than 1 wt% at the time of eating.

### [Effect of the Invention]

The present invention can provide a method of imparting aroma or flavor to food, particularly aroma or flavor like a livestock meat stock.

### [Brief Description of the Drawings]

Fig. 1 is a triangular diagram showing the sensory evaluation results in soups, which are influenced by the proportion of each blended component in an aroma and flavor-imparting composition.
Fig. 2 is a simplified triangular diagram showing the sensory evaluation results in soups, which are influenced by the proportion of each blended component in an aroma and flavor-imparting composition.

### [Description of Embodiments]

First, the present inventors prepared a livestock meat stock soup according to a cooking method of chef of general Chinese restaurants, and confirmed the presence of an aroma component important for the livestock meat stock soup. To be precise, a water vapor distillate of a livestock meat stock soup and a reduced pressure distillate of a diethyl ether extract were prepared, and the components were confirmed mainly by gas chromatography - sniffing method.

The present inventors have conducted intensive studies and found, regarding the contributing components of a livestock meat stock soup, that aroma components such as methional, thiazoles, dienals and the like are involved. The above-mentioned 3 components were quantified by a gas chromatography mass spectrometer (GC-MS) and, based on the quantification results, livestock meat stocks such as chicken stock, pork stock and the like were reproduced with aqueous solution, livestock meat soup and extract. However, the aroma thereof was far from that of the original livestock meat stock soup.

The present inventors have further conducted intensive studies and, surprisingly attempted to solve the problem by investigating a blend containing increased amounts of thiazoles and dienals under the condition that thiazoles are essential, rather than reproducing the blending amounts of methional, thiazoles and dienals, and based on these findings, completed the present invention.

The aroma or flavor-imparting composition of the present invention comprises methional, dienals and the thiazoles in proportions satisfying 20≤A≤80, 20≤B≤80, 0≤C≤40 and A+B+C=100, since the strength becomes higher and a fleshy smell increases like a livestock meat. When the composition of the present invention that imparts aroma or flavor like a livestock meat stock is added to food and drink, it imparts aroma or flavor like a livestock meat stock to the food and drink, and provides an effect of enhanced aroma or flavor quality of the food and drink as a whole.

The aroma used in the present invention means an odor (top flavor) felt only by the nose, without eating and drinking. In addition, the flavor used in the present invention means an odor (retro-nasal flavor) that passes from the oral cavity to the nose during eating and drinking.

In the present invention, the dienals is a generic term for compounds having two double bonds and one aldehyde group, and 2,4-decadienal and/or 2,4-heptadienal, 2,4-nonadienal, 2,4-undecadienal are preferable, since they can impart a more livestock meat-like aroma.

In the present invention, the thiazoles are 2-Isobutylthiazole and/or 5-acetyl-2,4-dimethylthiazole, since they can impart a more livestock meat-like aroma.

In the present invention, the concentration at the time of eating refers to a concentration at the time point of eating after cooking. In the present invention, the aroma or flavor-imparting composition is preferably contained in food in not less than 1 ppb and not more than 1 wt% at the time of eating. Furthermore, it is preferably contained in not less than 150 ppb and not more than 15 ppm. When the aroma or flavor-imparting composition is contained in a food at a level lower than this, the addition effect is weak, and when contained at a level higher than this, an irritating smell becomes unpreferably strong.

As the materials to be used in the present invention for the aroma or flavor-imparting composition, particularly the composition that imparts aroma or flavor like a livestock meat stock, those of various derivation such as synthesized products, extracted products, fermentation products, various materials after heating reaction and the like can be used as long as they are usable for food and drink. When such material for the composition that imparts aroma or flavor like a livestock meat stock is used, the form of use is not particularly limited and may be a direct addition of the material to the aroma or flavor-imparting composition, an addition thereof after diluting with water, solvent and the like, mixing thereof in the form of a yeast extract, a livestock meat extract, a seafood extract, a protein hydrolysate etc. with the aroma or flavor-imparting composition, and the like.

When the aroma or flavor-imparting composition, particularly the composition that imparts aroma or flavor like a livestock meat stock, of the present invention is added to a food, the form of use is not limited and forms such as a dry powder, a paste, a solution and the like can be mentioned. In addition, the timing of addition to a food or a seasoning is not limited to the addition of an ingredient before the production of food or seasoning. The effect of imparted livestock meat stock-like aroma or flavor can be obtained by the addition at any time during production, after completion, immediately before eating, during eating and the like.

While the food and drink to which the aroma or flavor, particularly the aroma or flavor like a livestock meat stock, is imparted in the present invention are not particularly limited, a more remarkable effect is observed in food and drink using livestock meat processed goods and livestock meat extract, particularly chicken processed goods and chicken extract. Specifically, European foods such as chicken consomme soup, beef consomme soup, curry, beef stew, white stew, steak, hamburg steak, cutlet and the like, Chinese foods such as Chinese soup, gyoza, shao-mai, fried rice, deep-fried food and the like, Japanese-style foods such as *Nikujaga, Chikuzenni* (chicken stew with taro, carrot, burdock, etc.) and the like, various seasonings such as worcester sauce, demi-glace sauce, ketchup, various sauces and the like, flavor seasonings such as chicken soup mix, rice such as rice ball, pilaf and the like are preferable for imparting and improving aroma or flavor like a livestock meat stock.

The present invention is further explained in the following by way of Examples. In the Examples, unless otherwise specified, the sensory evaluation was performed by sufficiently trained 4 expert panelists.

### [Examples]

### (Example 1: Influence of difference in addition concentrations of aroma and flavor-imparting composition on sensory evaluation in soups)

### <Production of chicken stock>

Whole chicken carcasses (cut in 1/4) were parboiled for 1 - 2 min, and pre-treated by removing scum and internal organs. The pre-treated whole chicken carcasses (4 kg), welsh onion (28 g), ginger (38 g) and water (6.5 kg) were placed in a cylindrical container, heated to boil over high heat, and boiled well for 4 hr over low heat after boiling. The scum was removed during heating and boiling well as necessary. After boiling well for 4 hr, the boiled well solution was filtered through a kitchen towel, and the oil floating on the filtered solution was skimmed therefrom. The remaining solution was used as a chicken stock.

### <Addition of various concentrations of savor or flavor-imparting composition to chicken stock>

To the chicken stock prepared above were added 2-isobutylthiazole, methional and 2,4-decadienal at proportions of 20%, 50% and 30%, respectively, such that the total concentration of the three components would be 1.57 ppb, 157 ppb, 15.7 ppm, 1570 ppm and 1.57%. The chicken stock free of the three components was used as a control.

For sensory evaluation, the preference of the livestock meat stock flavor was rated on a ten-point scale with the control as 5 points. The results are shown in Table 1.

[Table 1]

**Table 1 Sensory evaluation of soups according to different addition concentrations of aroma and flavor-imparting composition**

| concentration of three components | score |
|---|---|
| 1.57 ppb | 5.8 |
| 157 ppb | 6.2 |
| 15.7 ppm | 6.0 |
| 1570 ppm | 5.5 |
| 1.57% | 1.5 |
| control | 5.0 |

From the results of Table 1, the addition concentration of total three components of 1.57 ppb - 1570 ppm imparted a preferable meat flavor. Furthermore, 157 ppb - 15.7 ppm was found to be more preferable. When it was less than 1 ppb, the addition effect was unclear, and when it was 1.57%, the amount added was too much and off-flavors such as irritating smell and the like were observed.

### (Example 2 Influence of difference in proportion of each blended component in aroma and flavor-imparting composition on sensory evaluation in soups)

To the chicken stock prepared in Example 1 were added the three components of methional, 2,4-decadienal and 2-isobutylthiazole at proportions changed by 10%, such that the total concentration of the three components was 157 ppb. The chicken stock free of the three components was used as a control.

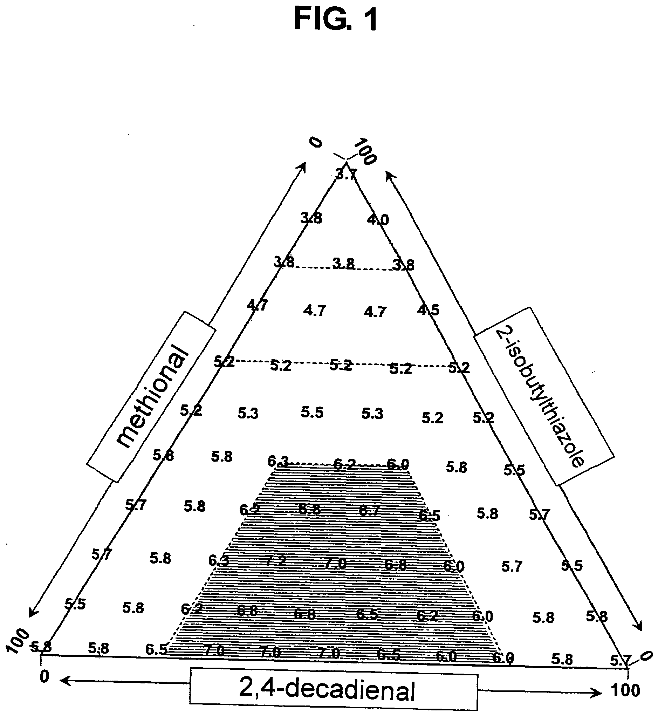

For sensory evaluation, the preference of the livestock meat stock flavor was rated on a ten-point scale with the control as 5 points. The results are shown in Fig. 1.

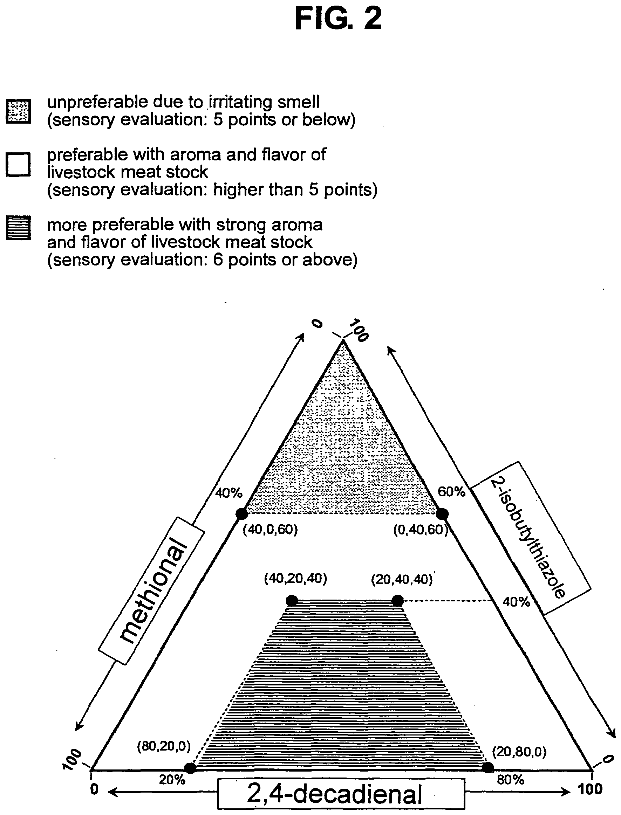

As is clear from the results of Fig. 1 and Fig. 2 summarizing Fig. 1, it has been clarified that a preferable livestock meat stock flavor is imparted when the proportions of methional, 2,4-decadienal and 2-isobutylthiazole are within the area surrounded by not less than 0% and not more than 100% of methional, not less than 0% and not more than 100% of 2,4-decadienal, and not less than 0% and not more than 60% of 2-isobutylthiazole, on the trilinear charts shown in Fig. 1 and Fig. 2 (plain parts in Fig. 1 and Fig. 2), as compared to the control. It has further been clarified that a more preferable meat flavor is imparted in the area surrounded by not less than 20% and not more than 80% of methional, not less than 20% and not more than 80% of 2,4-decadienal, and not less than 0% and not more than 40% of 2-isobutylthiazole, on the trilinear charts shown in Fig. 1 and Fig. 2 (horizontally striped) parts in Fig. 1 and Fig. 2).

### (Example 3 Evaluation of aroma and flavor-imparting composition using various thiazoles)

To the chicken stock prepared in Example 1 were added methional, 2,4-decadienal and various thiazoles at combined proportions of 35%, 35% and 30%, respectively, such that the total concentration of the three components was 157 ppb. The chicken stock free of the three components was used as a control.

For sensory evaluation, comprehensive evaluation of the preference and strength of the livestock meat stock flavor was rated on a ten-point scale with the control as 5 points.

Various thiazoles and the results of sensory evaluation then are shown in Table 2.

[Table 2]

**Table 2 Evaluation of aroma and flavor-imparting composition using various thiazoles**

| | sensory score |
|---|---|
| control | 5.0 |
| 2-isobutylthiazole | 9.2 |
| 4-methyl,5-vinylthiazole * | 7.5 |
| 2-(methylthio)benzothiazole * | 5.5 |
| benzothiazole * | 7.3 |
| 2-acetylthiazole * | 8.5 |
| 4,5-dimethylthiazole * | 7.7 |
| 4-methylthiazole * | 7.3 |
| 5-acetyl-2,4-dimethylthiazole | 8.7 |
| thiazole * | 7.5 |
| 2-ethyl-4-methylthiazole * | 7.7 |
| 2,4-dimethylthiazole * | 7.7 |

| | |
|---|---|
| * Reference only | |

From the results of Table 2, it has been clarified that 2-isobutylthiazole and 5-acetyl-2,4-dimethylthiazole impart a particularly preferable livestock meat stock flavor.

### (Example 4 Evaluation of aroma and flavor-imparting composition using various dienals)

To the chicken stock prepared in Example 1 were added methional, various dienals and 2-isobutylthiazole at combined proportions of 50%, 30% and 20%, respectively, such that the total concentration of the three components was 157 ppb. The chicken stock free of the three components was used as a control.

For sensory evaluation, comprehensive evaluation of the preference and strength of the livestock meat stock flavor was rated on a ten-point scale with the control as 5 points.

Various dienals and the results of sensory evaluation then are shown in Table 3.

[Table 3]

**Table 3 Evaluation of aroma and flavor-imparting composition using various dienals**

| | sensory score |
|---|---|
| control | 5.0 |
| trans,trans-2,4-heptadienal | 7.0 |
| trans,trans-2,4-nonadienal | 6.9 |
| trans-2,cis-6-nonadienal | 6.3 |
| trans,trans-2,4-decadienal | 7.0 |
| trans,trans-2,4-undecadienal | 6.8 |
| trans,trans-2,4-dodecadienal | 6.6 |

From the results of Table 3, it has been clarified that various dienals shown in Table 3 impart a preferable livestock meat stock flavor. It has been further clarified that, from among various dienals, the trans,trans form imparts a more preferable livestock meat stock flavor than does the trans,cis form. It has also been clarified that, from among various dienals, 2,4-heptadienal, 2,4-nonadienal, 2,4-decadienal and 2,4-undecadienal impart a particularly preferable livestock meat stock flavor.

### (Example 5 Influence on sensory evaluation of aroma and flavor-imparting composition in pork flavor seasonings)

Methional, dienal and thiazole were added to a flavor seasoning containing a pork extract such that methional, dienal and thiazole were 939 ppb, 40 ppb and 698 ppb, respectively. The mixture (5 g) was dissolved in 495 g of hot water and subjected to a sensory evaluation. As a result, the sample prepared by the addition of methional, dienal and thiazole was imparted with a preferable livestock meat stock flavor, thickness and mildness as compared to the sample free of methional, dienal and thiazole.

### (Example 6 Influence on sensory evaluation of aroma and flavor-imparting composition in pork flavor seasonings)

Methional, dienals and thiazoles were added to a flavor seasoning containing a pork extract such that methional, dienal and thiazole were 539 ppb, 40 ppb and 699 ppb, respectively. The mixture (5 g) was dissolved in 495 g of hot water and subjected to a sensory evaluation. As a result, the sample prepared by the addition of methional, dienal and thiazole was imparted with a preferable livestock meat stock flavor, a pleasant smell, spread and richness, as compared to the sample free of methional, dienal and thiazole.

### (Example 7 Influence on sensory evaluation of aroma and flavor-imparting composition in pork flavor seasonings)

Methional, dienal and thiazole were added to a flavor seasoning containing a pork extract, such that methional, dienal and thiazole were 784 ppb, 159 ppb and 1113 ppb, respectively. The mixture (5 g) was dissolved in 495 g of hot water and subjected to a sensory evaluation. As a result, the sample prepared by the addition of methional, dienal and thiazole was imparted with a preferable livestock meat stock flavor and spread, and a further enhanced spice flavor of a flavor seasoning, as compared to the sample free of methional, dienals and thiazoles.

### (Example 8 Influence on sensory evaluation of aroma and flavor-imparting composition in beef flavor seasonings)

Methional, dienal and thiazole were added to a flavor seasoning containing a beef extract such that methional, dienal and thiazole were 3722 ppb, 44 ppb and 4465 ppb, respectively. The mixture (5 g) was dissolved in 495 g of hot water and subjected to a sensory evaluation. As a result, the sample prepared by the addition of methional, dienal and thiazole was imparted with a preferable livestock meat stock flavor and a meat-like thickness as compared to the sample free of methional, dienal and thiazole.

### (Example 9 Influence on sensory evaluation of aroma and flavor-imparting composition in beef flavor seasonings)

Methional, dienal and thiazole were added to a flavor seasoning containing a beef extract such that methional, dienal and thiazole were 3682 ppb, 44 ppb and 4465 ppb, respectively. The mixture (5 g) was dissolved in 495 g of hot water and subjected to a sensory evaluation. As a result, the sample prepared by the addition of methional, dienal and thiazole was imparted with a preferable livestock meat stock flavor, a meat-like thickness and a pleasant smell as compared to the sample free of methional, dienal and thiazole.

### [Industrial Applicability]

The present invention relates to a method of imparting aroma and flavor to food, particularly a method of imparting livestock meat stock-like aroma and flavor.

## Claims

1. An aroma or flavor-imparting composition comprising methional, dienals and thiazoles in proportions satisfying 20≤A≤80, 20≤B≤80 and 0<C≤40 and A+B+C=100 wherein A shows parts by weight of methional, B shows parts by weight of dienals and C shows parts by weight of thiazoles, wherein the thiazoles are 2-isobutylthiazole and/or 5-acetyl-2,4-dimethylthiazole.

2. The aroma or flavor-imparting composition according to claim 1, wherein the dienals include 2,4-decadienal 2,4-heptadienal, 2,4-nonadienal, and/or 2,4-undecadienal.

3. A food containing the aroma or flavor-imparting composition according to claim 1 or 2 in not less than 1 ppb and not more than 1 wt% at the time of eating.

## Patentansprüche

1. Aroma oder Geschmack verleihende Zusammensetzung, die Methional, Dienale und Diazole in Verhältnissen enthalten, die 20≤A≤80, 20≤B≤80 und 0≤C≤40 und A+B+C=100 genügen, wobei A die Gewichtsteile von Methional angibt, B die Gewichtsteile von Dienalen und C die Gewichtsteile von Thiazolen angibt, wobei die Thiazole 2-Isobutylthiazol und/oder 5-Acetyl-2,4-dimethylthiazol sind.

2. Aroma oder Geschmack verleihende Zusammensetzung nach Anspruch 1, wobei die Dienale 2,4-Decadienal, 2,4-Heptadienal, 2,4-Nonadienal und/oder 2,4-Undecadienal umfassen.

3. Nahrungsmittel, das die Aroma oder Geschmack verleihende Zusammensetzung nach Anspruch 1 oder 2 zum Zeitpunkt des Verzehrs in nicht weniger als 1 ppb und nicht mehr als 1 Gew.-% enthält.

## Revendications

1. Arôme ou composition conférant un goût comprenant du méthional, des diénals et des thiazoles dans des proportions satisfaisant 20 ≤ A ≤ 80, 20 ≤ B ≤ 80 et 0 < C ≤ 40 et A + B + C = 100 où A représente les parties en poids de méthional, B représente les parties en poids de diénals et C représente les parties en poids de thiazoles, dans lequel les thiazoles sont le 2-isobutylthiazole et/ou le 5-acétyl-2,4-diméthylthiazole.

2. Arôme ou composition conférant un goût selon la revendication 1, dans lequel les diénals incluent le 2,4-décadiénal, le 2,4-heptadiénal, le 2,4-nonadiénal et/ou le 2,4-undécadiénal.

3. Aliment contenant l'arôme ou la composition conférant un goût selon la revendication 1 ou 2, en une proportion non inférieure à 1 ppb et non supérieure à 1 % en poids lors de l'ingestion.
